# EUROPEAN PATENT SPECIFICATION

(11) **EP 0 549 219 B1**
(45) Date of publication and mention of the grant of the patent: **10.06.1998**
(21) Application number: 92311365.8
(22) Date of filing: 14.12.1992
(51) Int. Cl.: G06F 12/08

(54) **A cache controller**
Cachesteuerungsschaltung
Circuit de commande d'antémémoire

(30) Priority: 24.12.1991 US 813078
(43) Date of publication of application: 30.06.1993
(73) Proprietor: MOTOROLA, INC., Schaumburg, IL 60196 (US)
(72) Inventor: Beavers, Bradford B., Austin, Texas 78748 (US); Reed, Paul A., Austin, Texas 78737 (US); Slaton, Jeff A., Austin, Texas 78745 (US)
(74) Representative: Hudson, Peter David

(56) References cited:
- EP-A- 0 461 926
- US-A- 4 675 811

## Description

### Field of the Invention

This invention relates generally to a cache memory system, and more particularly to a secondary cache controller in a cache memory system.

### Background of the Invention

As knowledge and technology become more complex, data processing systems are required to perform a greater number of functions at faster speeds. To enable a data processor to maximize it's performance, conventional circuitry must be modified to execute each function as quickly as possible. In particular, memory systems, which store information necessary for the proper operation of any data processing system, must be able to retrieve and provide information at a rate which is compatible with the speed at which the data processor is performing. To provide information more quickly, cache memory hierarchy systems have been developed.

In a cache memory hierarchy system, one or more small cache memory circuits are placed between the data processor and a larger cache memory circuit. The small cache memory circuits are generally referred to as primary caches and the large memory circuit is generally referred to as a secondary cache. In the cache memory hierarchy, the primary caches are used to provide data more quickly and the secondary cache is used to increase the probability that an information value required by the data processor is stored in a cache memory which may be quickly accessed. When an information value must be accessed from the secondary cache, the cache access time is longer than the cache access time of the primary cache, but is still substantially shorter than the access time of traditional memory circuits.

Although the cache access time is not substantially degraded by the cache memory hierarchy, the cache memory hierarchy system does require data coherency between each memory component. For example, if an information value located at a predetermined address value in one of the secondary caches is modified, the modified information value must also be observed by the primary cache. The primary cache must then be tested, or snooped, to determine whether an information value is stored therein. In a cache memory hierarchy system, a great number of information values are modified and propagated between the primary and secondary cache memories. The performance of the entire system is slowed considerably when each of the information values must be propagated to either the primary or the secondary cache memory. Additionally, the time required by both the primary and secondary cache memories to determine whether the information value is actually stored therein also adversely affects the processing time of the entire data processing system. As the cache memory hierarchy system is expanded, the problems associated with enforcing data coherency are increased. The processing time necessary to enforce data coherency between each component of the cache memory hierarchy system is substantially increased and, subsequently, the performance of the cache memory hierarchy system is decreased.

To ensure data coherency, but decrease an amount of time typically required to do so, inclusion is generally enforced. Inclusion is a property whereby all the contents of the primary cache are also stored in each of the secondary caches. By enforcing inclusion, an operation which snoops an information value which is not included in the secondary cache is, by definition, not included in the primary cache. Therefore, the number of snoop operations which must be performed is decreased and the cache memory hierarchy system is able to process a greater number of memory accesses and modifications in a minimal amount of time. Although inclusion improves the performance of a cache memory hierarchy system, the time required to enforce inclusion and subsequently perform a snoop operation still remains a major component in the processing time required by the memory system. Additionally, circuitry used to enforce inclusion may require a large amount of circuitry area which is generally not readily available on an integrated circuit. Several methods which are generally used to enforce inclusion are discussed in more detail below.

In a first method to force inclusion in a cache memory hierarchy, all modifications to information values stored in the secondary cache are propagated to test an associated information value in the primary cache. If the information value is stored in the primary cache, the information values are also modified in the primary cache. However, if the information value is not stored in the primary cache, the information values in the primary cache are not modified. Although the first method ensures that each information value modified in the secondary cache is also modified in the primary cache, an excessive amount of information must be transferred between the primary and secondary caches. When the information values are not stored in the secondary cache, the modified information values must still be propagated to the primary cache to be tested for inclusion. The amount of time required for each transaction within the secondary cache is further lengthened by the amount of time necessary to determine if an information value should be modified in the primary cache. By lengthening the amount of time required for each cache transaction, the performance of the data processor is degraded.

A second method used to enforce inclusion relies on the relative organization of each of the primary and secondary caches. A first article entitled "On the Inclusion Properties for Multi-Level Cache Hierarchies" was written by Jean-Loup Baer and Wen-Hann Wang describes the use of organization of the primary and secondary caches to enforce inclusion. The article was published in IEEE, pages 73 to 79 in November 1987. A second article also written by Baer and Wang and entitled "Multilevel Cache Hierarchies: Organizations, Protocols, and Performance" also describes the use of organization to enforce inclusion. The second article was published in the Journal of Parallel and Distributed Computing 6, pages 451 to 476, issued in 1989. As described in each of the articles, inclusion is ensured based upon the relative organizations of the primary and secondary caches. Although the second method provides a method to enforce inclusion, the relative organizations of each of the primary and secondary caches impose further restraints on the circuitry used to implement each of the caches. Additionally, the organizations of the caches are also not easily implemented in most cache memory system designs.

In some data processing systems such as Motorola's MC88100/MC88200, and MC68040, a third method is used to enforce inclusion. In the third method, the data processor provides a plurality of data values such that an external copy of the information values stored in the primary cache may be generated. An inclusion bit is added to each of a plurality of information values in the secondary cache to indicate if the information value is also stored in the primary cache. The inclusion bit and the external copies of the information values are then tested to determine whether an information value accessed in the secondary cache should also be modified in the primary cache. Conversely, when an information value is modified in the primary cache, the modified information value must also be modified in the secondary cache. To enforce inclusion using the third method requires processing time to generate the external copy of the information values for subsequent testing. Additionally, adding an extra bit in the secondary cache and adding more memory to store the external copy of the information values stored in the primary cache results in a substantial increase in the area of circuitry used by the secondary cache.

Additional background information is disclosed in US Patent No. 4,675,811 and European Patent Application No. EP-A-0461926.

Therefore, a need exists for a cache memory system having a cache controller for efficiently enforcing inclusion between each memory component of the system. A modification to an information value accessed in the secondary cache should be propagated to the primary cache in a minimal amount of time. Additionally, a minimal amount of circuitry should be used to enforce data coherence between each memory component of the system such that both circuit area and complexity are minimized.

### Summary of the Invention

The previously mentioned needs are fulfilled with the present invention.

In accordance with the invention there is provided a cache controller as claimed in claim 1.

These and other features, and advantages, will be more clearly understood from the following detailed description taken in conjunction with the accompanying drawing. It is important to note the drawings are not intended to represent the only form of the invention.

### Brief Description of the Drawing

FIG. 1 illustrates in block diagram form a cache multi-processor data processing system having a cache controller in accordance with the present invention;
FIG. 2 illustrates in block diagram form the second cache controller of FIG. 1; and
FIG. 3 illustrates in diagram form the relative uses of address values in accordance with the present invention.

### Detailed Description of a Preferred Embodiment

The present invention provides a cache controller for a multi-processor processing system having a cache memory hierarchy. In the implementation of the invention described herein, the cache controller efficiently determines whether an information value to be modified in a secondary cache memory should also be modified in a primary cache memory in a minimal amount of time.

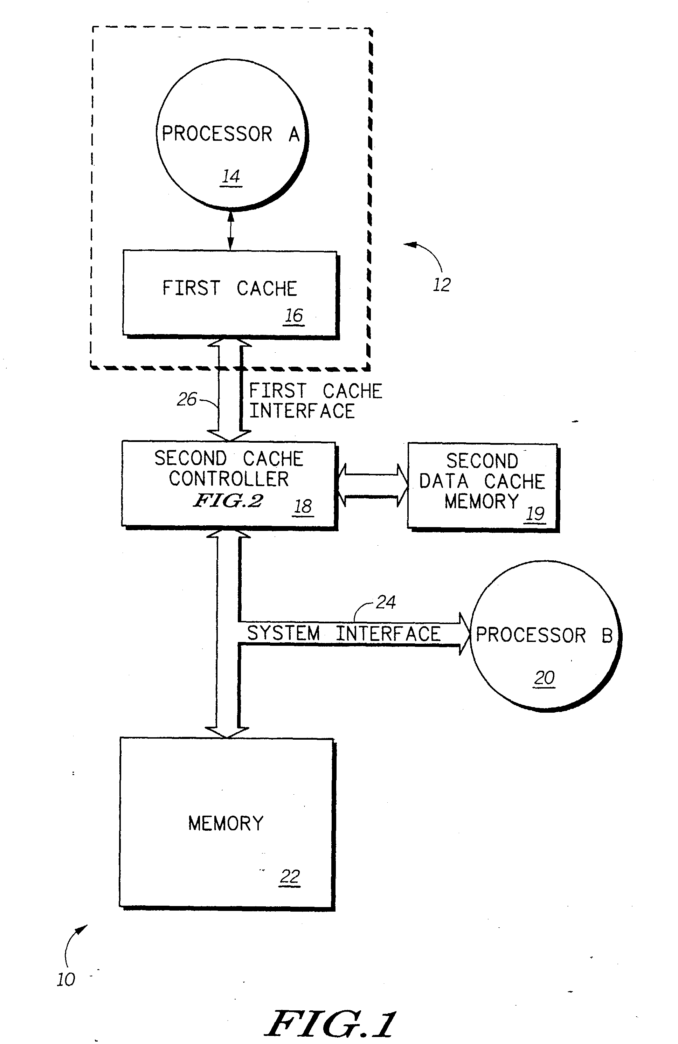

Illustrated in FIG.1 is a multi-processor data processing system 10. Multi-processor data processing system 10 is a hierarchical system which generally includes a primary system 12 having a processor A 14 and a first cache 16. Typically, the primary system 12 may be implemented on a single integrated circuit such as a Motorola MC88110 RISC device. Primary system 12 may, however, be implemented as a single integrated component or as a plurality of separate components based upon needs of a user of data processing system 10. Multi-processor data processing system 10 also has a second cache controller 18, a second data cache memory 19, a processor B 20, and a memory circuit 22. Second cache controller 18 determines whether a data value accessed or modified by either primary system 12 or processor B 20 is stored in second data cache memory 19.

A bidirectional port of processor A 14 communicates data and information values to a first bidirectional port of first cache 16. A second bidirectional port of first cache 16 is connected to a first bidirectional port of second cache controller 18 via a First Cache Interface bus 26. A second bidirectional port of second cache controller 18 is connected to a bidirectional port of both processor B 20 and memory circuit 22 via a System Interface bus 24. A third bidirectional portion of second cache controller 18 is connected to a bidirectional port of second data cache memory 19.

During operation, data processing system 10 performs a plurality of functions to ensure data coherency between first cache 16, second data cache memory 19, and memory circuit 22. In memory system 10, data coherency is maintained when a plurality of status bits indicates which one of first cache 16, second data cache memory 19, and memory circuit 22 stores a most recently modified information value. Additionally, memory system 10 enforces inclusion and filters snoop operations between second data cache memory 19 and first cache 16.

As an example, assume processor A 14 accesses an information value stored at a predetermined address location. If the address location has been recently accessed, the information value stored therein is provided by first cache 16. However, if the information value was used less recently, the information value may be stored in either second data cache memory 19 or memory circuit 22. If the information value is stored in second data cache memory 19, the information value is provided to first cache 16 via the First Cache Interface bus 26. First cache 16 then updates its memory to reflect that a new value was accessed and the information value is subsequently provided to processor A. Similarly, if the information is stored in memory circuit 22, the information value is provided to second cache controller 18 via System Interface bus 24. Second cache controller 18 updates both its memory and second data cache memory 19 to store the accessed information value and propagates the information value to first cache 16 via First Cache Interface bus 26. Again, first cache 16 modifies its memory to store the accessed information value and, subsequently, provides the information value to processor A 14. In each case, data coherency between first cache 16, second data cache memory 19, and memory circuit 22 is maintained.

Similarly, if processor B 20 modifies a data value at a predetermined address location in memory 22, second cache controller 18 is tested, or snooped, to determine if second data cache memory 19 stores the data value. Additionally, second cache controller 18 also determines whether the data value is stored in first cache 16. In the implementation of the invention described herein, second cache controller 18 efficiently performs this determination in a minimal amount of time and with little additional circuitry.

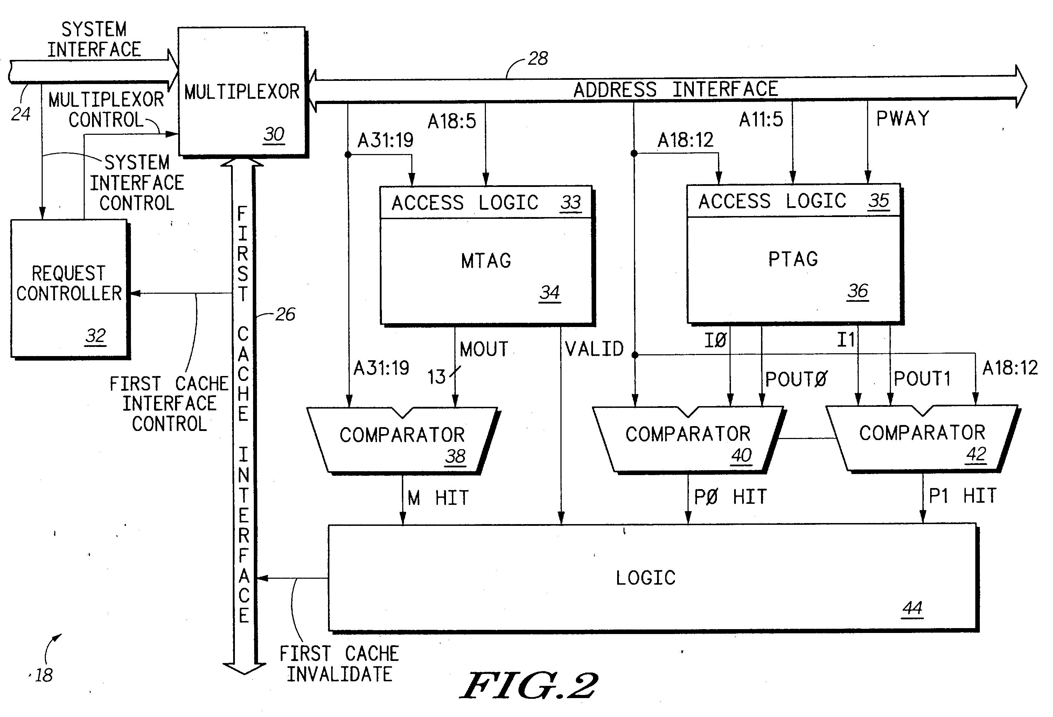

Second cache controller 18 is illustrated in greater detail in FIG. 2. In one particular embodiment, second cache controller 18 is a single integrated circuit referred to as the MC88410 and is available from Motorola, Inc. of Austin, Texas. The MC88410 provides all of the control and cache tag functionality necessary to support a direct mapped secondary data cache having 16K entries, or lines. As is explained below, the MC88410 also provides apparatus for enforcing inclusion with respect to a primary cache. This apparatus is specifically designed to support the primary cache implemented on the MC88110 RISC microprocessor. The MC88410 does not include the memory devices necessary to implement the data cache. FIG. 2 illustrates the MC88410 in greatly simplified form in order to better explain the present invention.

As illustrated in FIG. 2, second cache controller 18 generally includes a multiplexor 30, a request controller 32, an access logic circuit 33, a MTAG memory 34, an access logic circuit 35, a PTAG memory 36, a comparator 38, a comparator 40, a comparator 42, and a logic circuit 44.

MTAG memory 34 is a cache tag memory which stores a plurality of tags and status bits necessary to support secondary data cache memory 19. PTAG memory 36 is a cache tag memory which stores a plurality of information values necessary, when combined with the plurality of tags and status bits stored in MTAG memory 34, to enforce inclusion with respect to first cache 16 and to reduce a number of snoop transactions which must be performed by first cache 16.

System Interface bus 24 is connected to a first input of request controller 32 to provide a signal labelled "System Interface Control" and First Cache Interface bus 26 is connected to a second input of request controller 32 to provide a signal labelled "First Cache Interface Control." An output of request controller 32 is connected to multiplexor 30 to provide a signal labelled "Multiplexor Control." System Interface bus 24 is connected to a first bidirectional port of multiplexor 30 and First Cache Interface bus 26 is connected to a second bidirectional port of multiplexor 30. A third bidirectional port of multiplexor 30 is connected to a first and a second input of access logic circuit 33 and a first, a second, and a third input of access logic 35 via an Address Interface bus 28. Address Interface bus 28 provides a first portion of an value including bits thirty-one through nineteen to the first input of access logic circuit 33. The bits are collectively labelled "A31:19." When enabled, MTAG memory 34 is coupled to access logic 33 to receive and subsequently store each of bits A31:19 at a predetermined storage location in MTAG memory 34. Address Interface bus 28 also provides a second portion of the address value including bits eighteen through 5 to the second input of access logic circuit 33. The bits are collectively labelled "A18:5." Access logic circuit 33 decodes bits A18:5 to access a predetermined storage location in MTAG memory 34.

Address Interface bus 28 also provides a third portion of the address value to the first input of access logic circuit 35. The third portion of the address value is collectively labelled "A18:12" and includes bits eighteen through twelve of the address value. When enabled, PTAG memory 36 is coupled to access logic circuit 35 to receive and subsequently store each of bits A18:12 at a predetermined storage location in PTAG memory 36. Additionally, Address Interface bus 28 also provides a fourth portion of the address value to the second input of access logic circuit 35. The fourth portion of the address value includes bits eleven through five as is collectively labelled "A11:5." Access logic circuit 35 decodes bits A11:5 to access a predetermined storage location in PTAG memory 36. A signal labelled "PWAY" is provided to the third input of access logic circuit 35 via Address Interface bus 28. Additionally, the third bidirectional port of multiplexor 30 is connected to a first input of each of comparator 38, comparator 40, and comparator 42 via Address Interface bus 28. Bits A31:19 are provided to comparator 38 and bits A18:12 are provided to both comparator 40 and comparator 42.

A first output of MTAG memory 34 is connected to a second input of comparator 38 to provide a signal labelled "MOUT." An output of comparator 38 is connected to a first input of logic circuit 44 to provide a signal labelled "M Hit." A second output of MTAG memory 34 is connected to a second input of logic circuit 44 to provide a signal labelled "Valid." A first output of PTAG memory 36 is connected to a second input of comparator 40 to provide a signal labelled "POUT 0." An output of comparator 40 is connected to a third input of logic circuit 44 to provide a signal labelled "P0 Hit." Similarly, a second output of PTAG memory 36 is connected to a second input of comparator 42 to provide a signal labelled "POUT 1." An output of comparator 42 is connected to a fourth input of logic circuit 44 to provide a signal labelled "P1 Hit." An output of logic circuit 44 provides a signal labelled "First Cache Invalidate" to First Cache Interface bus 26. First Cache Interface bus 26 subsequently transfers both the First Cache Invalidate signal and the address value to first cache 16.

During operation, second cache controller 18 interfaces between second data cache memory 19 and one of either primary system 12, processor B 20, and memory circuit 22. For example, when processor B 20 modifies a data value at an address location in memory circuit 22, second cache controller 18 concurrently tests both MTAG memory 34 and PTAG memory 36 to respectively determine if the data value should also be modified in second data cache memory 19 and in first cache 16 to maintain data coherence.

When processor B modifies the data value, the corresponding address location is provided to both memory circuit 22 and second cache controller 18 via System Interface bus 24. Memory circuit 22 accesses a memory location at which the unmodified, or stale, data value is stored and subsequently modifies the stale data value to reflect the modified data value. Concurrently, the corresponding address is also provided to both request controller 32 and multiplexor 30 of second cache controller 18. To enable second cache controller 18 to determine if the information value is included in second data cache memory 19 and in first cache 16, the System Interface Control signal is asserted to enable request controller 32 to provide the Multiplexor Control signal. The Multiplexor Control signal enables multiplexor 30 to provide the corresponding address value via Address Interface bus 28.

In this implementation of the invention, MTAG memory 34 is configured to store a TAG value which is thirteen bits wide. Bits five through eighteen (A18:5) of the address location transferred by Address Interface bus 28 are decoded to indicate a predetermined memory storage location in MTAG memory 34 which stores the TAG value. When bits A18:5 are decoded by access logic 33, the corresponding TAG value is provided to comparator 38 via the MOUT signal. Additionally, MTAG memory 34 also stores a validity bit for each memory storage location therein. The validity bit indicates whether second data cache memory 19 has a valid copy of the information value stored at the memory storage location.

Second cache controller 18 must first determine if the information value modified by processor B 20 is stored in one or both of second data cache memory 19 and first cache 16. To determine if the information value is stored in second data cache memory 19, the MOUT signal is compared with bits A31:19 in comparator 38. If the MOUT signal which contains the TAG value accessed by bits A18:5 is equal to the information value transferred by bits A31:19, comparator 38 provides the M HIT signal to logic circuit 44 with a logic high value. If the MOUT signal is not equal to the information value transferred by bits A31:19, comparator 38 provides the M HIT signal to logic circuit 44 with a logic low value. Additionally, when the MHIT signal is provided to logic circuit 44, a validity bit corresponding to the TAG value accessed by decoding bits A18:5 is also provided to logic circuit 44 via the Valid signal. If the Valid signal has a logic high value, the TAG value is valid. This condition indicates that second cache data memory 19 includes the accessed data value. In this case, the validity bit corresponding to the TAG value must be modified. This modification is referred to as invalidating, or flushing, the cache entry.

In the example described herein, PTAG memory 36 is two-way set associative with 128 sets. This organization of PTAG memory 36 is dictated by the organization of first cache 16, which is a 128-set, 2-way set associative cache. PTAG memory 36 must duplicate the organization of the primary cache with which cache controller 18 is designed to operate. Two-way set associative indicates that each memory storage address in PTAG memory 36 actually accesses two storage locations depending on a value of the PWAY signal. Although PTAG memory 36 is illustrated as a two-way set associative cache in this example, PTAG memory 36 might be implemented as an n-way set associative cache, where n is an integer. For more information on set associative caches, refer to Computing Surveys, Volume 14, Number 3 written by A.J. Smith and published in September of 1982.

PTAG memory 36 is configured to store an inclusion index value which is seven bits wide. Bits five through eleven (A11:5) of the address transferred by Address Interface bus 28 are decoded to indicate a predetermined memory storage location in PTAG memory 36 which stores the inclusion index value. In first cache 16, bits A11:5 are also decoded to indicate a predetermined memory storage location in an external cache tag memory (not shown) which contains a cache tag value. However, the cache tag value accessed by bits A11:5 in first cache 16 includes address bits thirty-one through twelve (A31:12) and is twenty bits wide.

When bits A11:5 are decoded in PTAG memory 36, the corresponding inclusion index values are concurrently provided to comparator 40 via the POUT 0 signal and comparator 42 via the POUT 1 signal. Additionally, PTAG memory 36 also stores an inclusion bit for each memory storage location therein. The inclusion bit indicates whether first cache 16 has a valid copy of the information value. If the inclusion bit is a logic zero, first cache 16 does not have a valid copy of the information value. Similarly, if the inclusion bit is a logic high value, first cache 16 does have a valid copy. When the POUT 0 signal is provided to comparator 40, an inclusion bit corresponding to the inclusion index value accessed by decoding bits A11:5 is concurrently provided to comparator 40 via a signal labelled "I0." Similarly, when the POUT 1 signal is provided to comparator 42, an inclusion bit corresponding to the inclusion index value accessed by decoding bits A11:5 is concurrently provided to comparator 40 via a signal labelled "I1."

To determine if the information value corresponding to the address provided via Address Interface bus 28 is stored in first cache 16, bits A18:12 are compared both to POUT 0 in comparator 40 and POUT 1 in comparator 42. Additionally, the I0 and I1 signals are also provided to comparator 40 and comparator 42, respectively. If either the POUT 0 or POUT 1 signal, which contains the inclusion index value stored in PTAG memory 36, is equal to the address value transferred by bits A18:12 and the corresponding I0 or I1 signal is a logic high value, comparator 40 or comparator 42 respectively provides the P0 HIT signal or the P1 HIT signal to logic circuit 44 with a logic high value. If neither the POUT 0 signal nor the POUT 1 signal is equal to the address value transferred by bits A18:12 or the corresponding I0 or I1 signal is a logic low value, comparator 40 and comparator 42 respectively provide the P0 HIT signal and the P1 HIT signal to logic circuit 44 with a logic low value.

Logic circuit 44 then processes each of the M HIT, Valid, P0 HIT, and P1 HIT signals to determine whether the information value should be modified in first cache 16. If the MHIT signal is a logic high value and the Valid signal is a logic high value, the information stored at the transferred address location is a valid data value and the contents of MTAG memory 34 must be modified to maintain data coherency. Furthermore, to determine if the information value should be modified in first cache 16, either the P0 HIT or the P1 HIT signal must have a logic high value indicating that PTAG memory 36 stores an inclusion index value pointing to an information value stored in first cache 16. If each of these requirements is fulfilled, logic circuit 44 asserts the First Cache Invalidate signal When asserted, the First Cache Invalidate signal is provided to first cache 16 via First Cache Interface bus 26. Additionally, the address of the data value is also provided to first cache 16 via First Cache Interface bus 26. First Cache Invalidate signal invalidates the modified information value at the corresponding address in first cache 16 such that the modified information value may be stored therein in a subsequent operation.

To store the modified information value, request controller 32 provides the Multiplexor Control signal to enable MTAG memory 34 to appropriately modify the validity bit at the address location defined by bits A18:5. The PTAG memory 36 must also be modified to insure data coherency. The inclusion bit corresponding to the address location defined by bits A11:5 must also be appropriately modified.

Additionally, when the First Cache Invalidate signal is asserted and is provided to first cache 16 via First Cache Interface bus 26, the validity bit corresponding to an address location defined by bits A11:5 is flushed, or removed. Subsequently, bits A31:12 are stored at the address location by bits A11:5. Each of the address bits and the First Cache Invalidate signal is provided to first cache 16 via the First Cache Interface bus 26.

An information value may be modified in data processing system 10 such that data coherency is achieved in a minimal amount of time. Rather than propagating all modifications to first cache 16, PTAG memory 36 is used to determine if an information value is stored in first cache 16. PTAG memory 36 allows concurrent testing of information values in both first cache 16 and in MTAG memory to determine inclusion. By recognizing that the information stored in first cache 16 is equivalent to the information value stored in MTAG 34 concatenated with an inclusion index value, the circuitry and time necessary to determine inclusion are both minimized. Therefore, when both MHIT and one of either P0 HIT or P1 HIT are asserted, logic circuit 44 is enabled to indicate that first cache 16 should be modified to maintain data coherency. Additionally, PTAG memory 36 stores only a portion of the contents of first cache 16 such that a minimal amount of circuitry is required to insure data coherency.

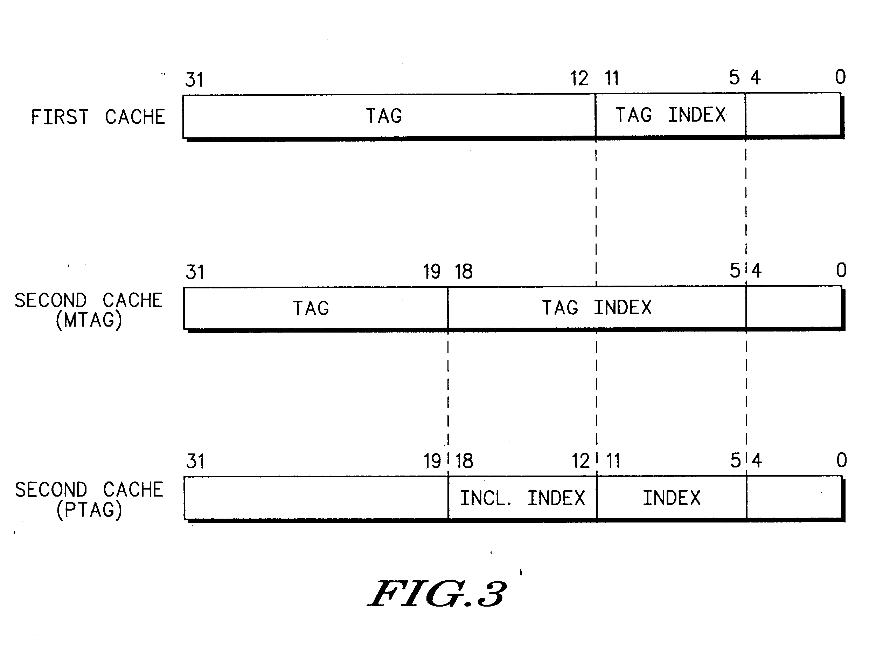

The relationship between the various portions of the address values used for different purposes in first cache 16 and second cache controller 18 may be better understood with reference to FIG. 3. In first cache 16, address bits A4:0 are not used, or "don't cared." Address bits A11:5 are referred to as a TAG INDEX and are used to access a cache tag memory (not shown) in primary system 12 and address bits A31:12 are referred to as a TAG and are stored in the cache tag memory in primary system 12. In MTAG memory 34 of second cache controller 18, address bits A4:0 are not used, address bits A18:5 are a TAG INDEX and are decoded by access logic circuit 33 to access MTAG memory 34. Similarly, address bits A31:19 are a TAG and are stored in MTAG memory 34. In PTAG memory 36 of second cache controller 18, address bits A4:0 are not used. Address bits A11:5 are decoded by access logic circuit 35 to access PTAG memory 36. An INCLUSION INDEX is formed by bits A18:12 and are stored in PTAG memory 36. Note that the INDEX bits in the case of first cache 16 and PTAG memory 36 are the same address bits. Note also that the INCLUSION INDEX of PTAG memory 36 comprises those address bits which are included in the TAG of first cache 16, but which are not included in the TAG of MTAG memory 34. Address bits A31:19 need not be used or implemented in PTAG memory 36. It is these relationships which permit PTAG memory 36 to be minimally sized, yet still provide the functionality necessary to enforce inclusion and reduce the number of snoop transactions which must be performed by first cache 16.

The implementation of the invention described herein is provided by way of example only. Many other implementations may exist for executing the function described herein. For example, primary system 12 may be implemented on a single integrated circuit or as separate components. Additionally, although only processor B 20 is shown in memory system 10 of FIG. 1, a plurality of other data processors may also be implemented. Additionally, request controller 32 may be implemented as a state machine to control operation of second cache controller 18. PTAG memory 36 may also be implemented as a single mapped cache memory or as a n-way associative cache memory, where n is an integer, depending on the organization of the primary cache with which it is to cooperate.

## Claims

1. A cache controller (18) comprising:
first bus interface means (30) for coupling the cache controller to a first bus (24);
second bus interface means (30) for coupling the cache controller to a second bus (26);
a first cache tag memory array (34);
first access means (33) coupled to the first bus interface means, the second bus interface means, and the first cache tag memory array for accessing the first cache tag memory array by processing a first portion of an information value provided by one of either the first or second bus interface means to produce a cache tag value; and
first compare means (38) coupled to the first bus interface means, the second bus interface means, and the first access means for comparing a second portion of the information value to the cache tag value to produce a first match signal for indicating when a first cache (19) data memory external to the cache controller should be modified in response to the information value;
an inclusion index memory array (36) for storing an inclusion index, the inclusion index indicating when the information value is stored in a second cache memory (16) external to the cache controller and coupled to the cache controller through said second bus (26);
second access means (35) coupled to the first bus interface means, the second bus interface means, and the inclusion index memory array for accessing the inclusion index memory array by processing a third portion of the information value to retrieve the inclusion index stored in the inclusion index memory array;
second compare means (40, 42) coupled to the first bus interface means, the second bus interface means, and the second access means for comparing a fourth portion of the information value to the inclusion index to produce a second match signal for indicating when the second cache (16) should be modified in response to the information value;
wherein the cache controller is characterized by:
the inclusion index memory array being adapted to indicate when the information value is stored in the second cache memory external to the cache controller by storing only a portion of the information value stored in the second cache memory external to the cache controller; and
logic means (44) for combining the first match signal and the second match signal to indicate whether a predetermined cache tag value is stored either in both the first cache tag memory array (34) and the second cache memory (16) external to the cache controller or in only the first cache tag memory array (34).

2. The cache controller of claim 1 wherein the fourth portion of the information value is a portion of the predetermined cache tag value stored in the cache tag memory array external to the cache controller which is not included in the cache tag value produced by the first access means.

3. The cache controller of claim 1 wherein the fourth portion of the information value is a portion of the first portion of the information value not included in the third portion.

4. The cache controller of claim 1 wherein the first portion of the information value is equal to the inclusion index concatenated with the third portion of the information value.

5. The cache controller of claim 1 wherein the inclusion index produced by the inclusion index memory array includes an information value and an inclusion bit.

6. A cache controller according to any preceding claim, wherein said cache controller is a second level cache controller for a two level cache system.

7. A data processing system (10), comprising :
a cache controller (18) as claimed in any preceding claim;
a data processor (20);
bus interface means for coupling the data processor to said first bus (24);
a second cache tag memory array within said second cache memory (16).

## Patentansprüche

1. Cache-Controller (18) der umfaßt:
eine erste Bus-Schnittstellenvorrichtung (30) zum Verbinden des Cache-Controllers mit einem ersten Bus (24);
eine zweite Bus-Schnittstellenvorrichtung (30) zum Verbinden des Cache-Controllers mit einem zweiten Bus (26);
eine erste Cache-TAG-Speichermatrix (34);
eine erste Zugriffsvorrichtung (33), die mit der ersten Bus-Schnittstellenvorrichtung, der zweiten Bus- Schnittstellenvorrichtung und der ersten Cache-TAG-Speichermatrix verbunden ist, zum Zugreifen auf die erste Cache-TAG- Speichermatrix durch das Verarbeiten eines ersten Teiles eines entweder von einer ersten oder zweiten Bus- Schnittstellenvorrichtung bereitgestellten Informationswertes, um einen Cache-TAG-Wert zu erzeugen, und
eine erste Komparatorvorrichtung (38), die mit der ersten Bus-Schnittstellenvorrichtung, der zweiten Bus- Schnittstellenvorrichtung und der ersten Zugriffsvorrichtung verbunden ist, zum Vergleichen eines zweiten Teiles des Informationswerts mit dem Cache-TAG-Wert, um ein erstes Übereinstimmungssignal zu erzeugen, um anzuzeigen ob ein Datenspeicher des ersten Cache (19) außerhalb des Cache-Controllers in Abhängigkeit vom Informationswert geändert werden soll,
eine Inklusionsindex-Speichermatrix (36) zum Speichern eines Inklusionsindexes, wobei der Inklusionsindex anzeigt, ob der Informationswert in einem zweiten Cache-Speicher (16) außerhalb des Cache-Controllers und verbunden mit dem Cache-Controller über den zweiten Bus (26) gespeichert ist,
eine zweite Zugriffsvorrichtung (35), die mit der ersten Bus-Schnittstellenvorrichtung, der zweiten Bus- Schnittstellenvorrichtung und der Inklusionsindex-Speichermatrix verbunden ist, zum Zugreifen auf die Inklusionsindex-Speichermatrix durch das Verarbeiten eines dritten Teils des Informationswertes, um den in der Inklusionsindex-Speichermatrix gespeicherten Inklusionsindex wiederzuholen,
zwei Komparatorvorrichtungen (40, 42), die mit der ersten Bus-Schnittstellenvorrichtung, der zweiten Bus- Schnittstellenvorrichtung und der zweiten Zugriffsvorrichtung verbunden sind, zum Vergleichen eines vierten Teiles des Informationswerts mit dem Inklusionsindex, um ein zweites Übereinstimmungssignal zu erzeugen, um anzuzeigen ob der zweite Cache (16) abhängig vom Informationswert geändert werden soll,
wobei der Cache-Controller gekennzeichnet ist durch:
die Inklusionsindex-Speichermatrix, die durch das Speichern von nur einem Teil des im zweiten Cache-Speicher außerhalb des Cache-Controllers gespeicherten Informationswerts angepaßt ist, um anzuzeigen ob der Informationswert im zweiten Cache-Speicher außerhalb des Cache-Controllers gespeichert ist, und
eine Logikvorrichtung (44) für das Kombinieren des ersten Übereinstimmungssignals und des zweiten Übereinstimmungssignals, um anzuzeigen ob ein vorgegebener Cache-TAG-Wert sowohl in der ersten Cache-TAG-Speichermatrix (34) als auch im zweiten Cache-Speicher (16) außerhalb des Cache-Controllers oder nur in der ersten Cache-TAG-Speichermatrix (34) gespeichert wird.

2. Cache-Controller nach Anspruch 1, bei dem der vierte Teil des Informationswerts ein Teil des vorgegebenen Cache-TAG-Werts ist, der in der Cache-TAG-Speichermatrix außerhalb des Cache-Controllers gespeichert wird, der nicht im von der ersten Zugriffsvorrichtung erzeugten Cache-TAG-Wert enthalten ist.

3. Cache-Controller nach Anspruch 1, bei dem der vierte Teil des Informationswerts ein Teil des ersten Teils des Informationswerts ist, der nicht im dritten Teil enthalten ist.

4. Cache-Controller nach Anspruch 1, bei dem der erste Teil des Informationswerts gleich dem Inklusionsindex ist, der mit dem dritten Teil des Informationswerts verkettetet ist.

5. Cache-Controller nach Anspruch 1, bei dem der durch die Inklusionsindex-Speichermatrix erzeugte Inklusionsindex einen Informationswert und ein Inklusionsbit enthält.

6. Cache-Controller nach einem vorangegangenen Anspruch, bei dem der Cache-Controller ein Cache-Controller auf der zweiten Ebenen für ein Cache-System mit zwei Ebenen ist.

7. Datenverarbeitungssystem (10), das umfaßt:
einen Cache-Controller (18) gemäß einem der vorangegangenen Ansprüche, der umfaßt:
einen Datenprozessor (20),
eine Bus-Schnittstellenvorrichtung zum Verbinden des Datenprozessors mit einem ersten Bus (24),
eine zweite Cache-TAG-Speichermatrix im zweiten Cache-Speicher (16).

## Revendications

1. Dispositif (18) de commande de mémoire cache comprenant :
un premier moyen (30) faisant fonction d'interface de bus, qui sert à coupler le dispositif de commande de mémoire cache à un premier bus (24) ;
un deuxième moyen (30) faisant fonction d'interface de bus, qui sert à coupler le dispositif de commande de mémoire cache à un deuxième bus (26) ;
un ensemble (34) mémoire d'étiquettes de première mémoire cache ;
un premier moyen d'accès (33) couplé au premier moyen d'interface de bus, au deuxième moyen interface de bus, et à l'ensemble mémoire d'étiquettes de première mémoire cache et permettant de faire accès à l'ensemble mémoire d'étiquettes de première mémoire cache par traitement d'une première partie d'une valeur d'information fournie par l'un ou l'autre des premier et deuxième moyens interfaces de bus afin de produire une valeur d'étiquette de mémoire cache ; et
un premier moyen de comparaison (38) couplé au premier moyen interface de bus, au deuxième moyen interface de bus et au premier moyen d'accès afin de comparer une deuxième partie de la valeur d'information avec la valeur d'étiquette de mémoire cache pour produire un premier signal d'appariement servant à indiquer lorsqu'une première mémoire cache de données (19), extérieure au dispositif de commande de mémoire cache doit être modifiée en réponse à la valeur d'information ;
un ensemble (36) mémoire d'index d'inclusion servant à stocker un index d'inclusion, l'index d'inclusion indiquant lorsque la valeur d'information est stockée dans une deuxième mémoire cache (16) extérieure au dispositif de commande de mémoire cache et couplée au dispositif de commande de mémoire cache par l'intermédiaire dudit deuxième bus (26) ;
un deuxième moyen d'accès (35) couplé au premier moyen interface de bus, au deuxième moyen interface de bus et à l'ensemble mémoire d'index d'inclusion et permettant de faire accès à l'ensemble mémoire d'index d'inclusion par un traitement d'une troisième partie de la valeur d'information visant à extraire l'index d'inclusion stocké dans l'ensemble mémoire d'index d'inclusion ;
un deuxième moyen de comparaison (40, 42) couplé au premier moyen interface de bus, au deuxième moyen interface de bus, et au deuxième moyen d'accès afin de comparer une quatrième partie de la valeur d'information avec l'index d'inclusion pour produire un deuxième signal d'appariement servant à indiquer lorsque la deuxième mémoire cache (16) doit être modifiée en réponse à la valeur d'information ;
où le dispositif de commande de mémoire cache est caractérisé par :
le fait que l'ensemble mémoire d'index d'inclusion est conçu pour indiquer lorsque la valeur d'information est stockée dans la deuxième mémoire cache extérieure au dispositif de commande de mémoire cache par stockage d'une partie seulement de la valeur d'information stockée dans la deuxième mémoire cache extérieure au dispositif de commande de mémoire cache ; et
un moyen logique (44) servant à combiner le premier signal d'appariement et le deuxième signal d'appariement pour indiquer si une valeur d'étiquette de mémoire cache prédéterminée est stockée soit à la fois dans l'ensemble mémoire d'étiquettes de première mémoire cache (34) et la deuxième mémoire cache (16) extérieure au dispositif de commande de mémoire cache, soit seulement dans l'ensemble mémoire d'étiquettes de première mémoire cache (34).

2. Dispositif de commande de mémoire cache selon la revendication 1, où la quatrième partie de la valeur d'information est une partie de la valeur d'étiquette de mémoire cache prédéterminée stockée dans l'ensemble mémoire d'étiquettes de mémoire cache extérieur au dispositif de commande de mémoire cache qui n'est pas incluse dans la valeur d'étiquette de mémoire cache produite par le premier moyen d'accès.

3. Dispositif de commande de mémoire cache selon la revendication 1, où la quatrième partie de la valeur d'information est une partie de la première partie de la valeur d'information non incluse dans la troisième partie.

4. Dispositif de commande de mémoire cache selon la revendication 1, où la première partie de la valeur d'information est égale à l'index d'inclusion mis en concaténation avec la troisième partie de la valeur d'information.

5. Dispositif de commande de mémoires caches selon la revendication 1, où l'index d'inclusion produit par l'ensemble mémoire d'index d'inclusion comporte une valeur d'information et un bit d'inclusion.

6. Dispositif de commande de mémoire cache selon l'une quelconque des revendications précédentes, où ledit dispositif de commande de mémoire cache est un dispositif de commande de mémoires caches de deuxième niveau pour un système de mémoires caches à deux niveaux.

7. Système (10) de traitement de données, comprenant :
un dispositif (18) de commande de mémoire cache selon l'une quelconque des revendications précédentes ;
un dispositif (20) de traitement de données ;
un moyen faisant fonction d'interface de bus et servant coupler ledit dispositif de traitement de données audit premier bus (24) ;
un ensemble mémoire d'étiquettes de deuxième mémoire cache disposé à l'intérieur de ladite deuxième mémoire cache (16).
